# EUROPÄISCHE PATENTANMELDUNG

(11) **EP 3 435 094 A2**
(43) Veröffentlichungstag der Anmeldung: **30.01.2019**
(21) Anmeldenummer: 18181854.3
(22) Anmeldetag: 05.07.2018
(51) Int. Cl.: G01P 3/00, G01P 3/487, G01P 3/66, G01P 21/02

(54) **VERFAHREN UND VORRICHTUNG ZUR ERFASSUNG EINER DREHGESCHWINDIGKEIT EINES RADES EINES ZWEIRADS**

(30) Priorität: 27.07.2017 DE 102017212924
(71) Anmelder: Robert Bosch GmbH, 70442 Stuttgart (DE)
(72) Erfinder: Stegmaier, Juergen, 72074 Tuebingen (DE); Schnee, Jan, 71093 Weil Im Schoenbuch (DE)

(57) **Zusammenfassung**

Die vorliegenden Erfindung betrifft ein Verfahren zur Erfassung der Drehgeschwindigkeit eines Rades eines Zweirads, ein Überprüfungsverfahren, welches die Korrektheit der erfassten Drehgeschwindigkeit überprüft, eine Auswerteeinheit, die eines der beiden Verfahren ausführt sowie ein Zweirad mit einer derartigen Auswerteeinheit.
Ein Magnetfeldsensor wird am Rahmen des Fahrrads angebracht, mindestens ein Magnet am Rad befestigt. Die Signale des Magnetfeldsensors werden mit mindestens einem Schwellwert verglichen. Es werden mehrere Möglichkeiten beschrieben, eine Geschwindigkeit zu bestimmen: aus der Breite eines einzelnen Signalpeaks, aus der Zeitdauer zwischen zwei aufeinanderfolgenden Peaks oder aus der Steigung des Signals an einem vorgegebenen Punkt des Signalpeaks, der durch das überschreiten eines Schwellwerts bestimmt werden kann. Zur Überprüfung können zwei auf verschiedene Weise bestimmte Geschwindigkeitsgrößen miteinander verglichen werden, wobei bei einer Abweichung eine Fehlermeldung ausgegeben wird.

## Beschreibung

Die Erfindung betrifft eine Auswerteeinheit, welche das Bewegungsverhalten eines Rads eines Zweirads erfasst sowie ein mit dieser Auswerteeinheit ausgestattetes Zweirad.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, bei dem die Drehung der Fahrradreifen erfasst wird. Dabei sind die Raddrehzahlsensoren als Magnetsensoren beispielsweise ortsfest an der Vorderradgabel vorgesehen, die bei jedem Durchlauf eines Magneten an der Speiche einen Impuls liefern. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation. Auch die Erfassung der Bewegungsrichtung des Rades ist alleine aus diesen Signalen nicht ableitbar, da sowohl eine Vorwärts- als auch eine Rückwärtsfahrt die gleichen Messsignale liefern würde.

Als Alternative können Beschleunigungssensoren verwendet werden, die ebenfalls eine Geschwindigkeitsinformation erzeugen können. Zusätzlich können durch derartige Beschleunigungssensoren auch die Bewegungsrichtungen erfasst werden, so dass eine Unterscheidung zwischen einer Vorwärtsfahrt und einer Rückwärtsfahrt erfolgen kann. Der Betrieb derartiger Beschleunigungssensoren ist jedoch energieaufwändiger, so dass diese Art der Erfassung eher bei elektrifizierten Fahrzeugen zum Einsatz kommt.

Mit der vorliegenden Erfindung soll ein System beschrieben werden, welches in einfacher Weise über die Erfassung von Magnetfeldsensorsignalen eine genauere Erfassung des Bewegungsverhaltens eines Rades eines Zweirads ermöglicht.

### Offenbarung der Erfindung

Gemäß der vorliegenden Erfindung wird ein Verfahren zur Erfassung der Drehgeschwindigkeit eines Rades eines Zweirads, ein Überprüfungsverfahren, welches die Korrektheit der erfassten Drehgeschwindigkeit überprüft, eine Auswerteeinheit, die eines der beiden Verfahren ausführt sowie ein Zweirad mit einer derartigen Auswerteeinheit beansprucht. Dabei ist vorgesehen, dass das Zweirad, zum Beispiel ein Fahrrad oder auch ein Elektrofahrrad, einen Magnetfeldsensor aufweist, der bevorzugt am oder im Rahmen bzw. rahmennah an einem Motor oder am Gepäckträger angeordnet ist. Weiterhin ist vorgesehen, dass das Zweirad, an dem eines der beanspruchten Verfahren ausgeführt werden soll, wenigstens ein Rad mit einem Magneten aufweist, der sich mit dem Rad dreht. Dabei ist bevorzugt vorgesehen, dass sich der wenigstens eine Magnet möglichst weit außen am Rad befindet, z.B. am oder im Mantel, an oder in der Felge oder im Reifenventil. Zusammen mit einer möglichst Rad nahen Anordnung des Magnetfeldsensors, z.B. im Bereich der Tretkurbel, am Unterrohr oder im oder an einem Gehäuse einer Antriebseinheit eines Elektrofahrrads wird so die räumliche Distanz zwischen Magnet und Magnetfeldsensor zur Erfassung der Magnetfeldsensorsignale des drehenden Magneten gering gehalten.

Zur Erfassung der Drehgeschwindigkeit des überwachten Rades mit dem wenigstens einen Magneten werden mittels des Magnetfeldsensors bei der Drehung des Rades erste Magnetfeldsensorsignale erfasst. Diese ersten Magnetfeldsensorsignale repräsentieren somit die Drehung des Magneten im Rad. Ist das Auflösungsvermögen bzw. der Erfassungsbereich des Magnetfeldsensors derart begrenzt, dass nur bei einer Annäherung des Magneten unterhalb einer Erfassungsschwelle ein Magnetfeldsensorsignal erzeugt wird, werden dadurch Messwertpeaks erzeugt, die einen Durchgang des Magneten durch den Erfassungsbereich darstellen. Demgegenüber zeigt das Magnetfeldsensorsignal bei einem Magneten außerhalb des Erfassungsbereichs lediglich ein Hintergrundrauschen. Durch die so erhaltenen Magnetfeldsensorsignale kann eindeutig die Annäherung und Entfernung des Magneten erkannt und ausgewertet werden.

Zur Ableitung einer ersten Drehgeschwindigkeitsgröße, die ein Maß für die Drehgeschwindigkeit des Rades darstellt, werden die ersten Magnetfeldsensorsignale mit wenigstens einem Schwellenwert verglichen. Überschreitet oder unterschreitet das erste Magnetfeldsensorsignal den wenigstens einen Schwellenwert, je nachdem, welche Ausrichtung das Magnetfeldsensorsignal bzw. die Polarisation des Magneten im Rad aufweist, kann die erste Drehgeschwindigkeitsgröße und ebenso die Fortbewegungsgeschwindigkeit des Zweirads abgeleitet werden.

Durch dieses Verfahren bzw. durch die dazu gehörige Auswerteeinheit kann auf einfache Art und Weise berührungslos ein Geschwindigkeitssignal erzeugt werden. Hierbei ist besonders vorteilhaft, dass nicht eine komplette Umdrehung des Rades erfasst werden muss. Stattdessen ist ausreichend, dass tatsächlich nur das erfasste Magnetfeldsensorsignal ausreicht, um daraus die Drehgeschwindigkeit des überwachten Rades und somit auch die Geschwindigkeit des Zweirads in Fortbewegungsrichtung zu erfassen.

In einer Weiterbildung der Erfindung wird eine gerichtete Information über die Magnetfeldstärke zur Auswertung und somit zur Erfassung der Drehgeschwindigkeitsgröße verwendet. Hierbei wird besonders bevorzugt die Magnetfeldkomponente Bx in Richtung x der Fortbewegung des Zweirads und/oder die Magnetfeldkomponente By in Richtung der Hochachse y des Zweirads erfasst. Hiermit kann die Annäherung und Entfernung des Magneten im überwachten Rad an den Magnetfeldsensor in einer vorgegebenen Richtung erkannt werden, ohne dass Einstreuungen von Magneten in der Umgebung die Messsignale verfälschen.

Eine spezielle Ausgestaltung der Erfindung erfasst eine erste Zeitdauer der Magnetfeldsensorsignale, um daraus eine erste Drehgeschwindigkeitsgröße des Rades und somit eine Fortbewegungsgeschwindigkeit des Zweirads ableitet zu können, beispielsweise mit Hilfe der Kenntnis der Radgröße. Hierbei werden die erfassten ersten Magnetfeldsensorsignale mit einem Start-Schwellenwert und einem End-Schwellenwert verglichen. Übersteigen die ersten Magnetfeldsensorsignale den Start-Schwellenwert zu einem ersten Zeitpunkt so startet die Zeiterfassung. Diese Zeiterfassung wird zu einem zweiten Zeitpunkt beendet, wenn die ersten Magnetfeldsensorsignale einen End-Schwellenwert unterschreiten. Dabei kann bei einer Umkehrung der Polarisation des Magneten im Rad auch eine Unterschreitung des Start-Schwellenwerts und ein nachfolgendes Überschreiten des End-Schwellenwerts vorgesehen sein, um die Zeiterfassung durchzuführen. Weiterhin kann vorgesehen sein, dass der Start-Schwellenwert und der End-Schwellenwert übereinstimmen.

Durch diese Zeiterfassung kann der Zeitraum bestimmt werden, in dem sich der den ersten Magnetfeldsensorsignalen zugeordnete Magnet in Erfassungsreichweite des Magnetfeldsensors befindet bzw. ein ausreichend großes Messsignal in dem Magnetfeldsensor auslöst. Dies erfolgt üblicherweise bei der größten Annäherung des Magneten an den Magnetfeldsensor, wobei die zeitliche Breite der Messsignale zusätzlich von der Umfangsbreite des Magneten abhängt. Die Schwellenwerte sollten dabei derart gewählt werden, dass sie einen ausreichenden Abstand zum normalen Messrauschen aufweisen, um eine eindeutige Identifikation des sich drehenden Magneten und dessen Drehgeschwindigkeit zu erlauben.

Besonders vorteilhaft ist eine Ausgestaltung, bei der zwei Magnetfeldkomponenten ausgewertet werden, um die erste Drehgeschwindigkeitsgröße zu erzeugen. Hierzu wird beispielsweise bei den ersten Magnetfeldsensorsignale ein erster Vergleich mit den Magnetfeldkomponenten Bx und ein zweiter Vergleich mit den Magnetfeldkomponenten By durchgeführt. Durch eine gleichzeitige Auswertung beider Magnetfeldkomponenten kann eine genauere Bestimmung des Durchlaufs sowie des Drehverhaltens des Magneten erkannt werden. Hierbei können sowohl im ersten als auch im zweiten Vergleich die entsprechenden ersten Magnetfeldsensorsignale mit jeweils einem oder mehreren Schwellenwerte verglichen werden. Neben der bereits erwähnten ersten Zeitdauer kann in den Vergleichen auch die Änderung der Magnetfeldstärke bei Erreichen oder Überschreiten jeweils eines Schwellenwerts erfasst werden. Diese Änderung der Magnetfeldstärke kann ebenso wie die erste Zeitdauer ein Maß für die erste Drehgeschwindigkeitsgröße darstellen, aus der anschließend die Fortbewegungsgeschwindigkeit des Zweirads abgeleitet werden kann.

Generell kann vorgesehen sein, die Änderung der Magnetfeldstärke zumindest durch einen Vergleich der ersten Magnetfeldsensorsignale mit wenigstens einem Schwellenwert zu erfassen. Dabei kann vorgesehen sein, dass diese Änderung zum Zeitpunkt des Überschreitens oder je nach Polarisation des Magneten bzw. der Magnetfeldsensorsignale auch bei einem Unterschreiten des entsprechenden Schwellenwerts erfasst oder festgestellt wird. Diese Änderung der Magnetfeldstärke hängt stark von der Drehgeschwindigkeit des Magneten im Rad und von der Bewegungsgeschwindigkeit in den Erfassungsbereich des Magnetfeldsensors bzw. aus ihm heraus ab. So kann beispielsweise die Änderung bei einer Anstiegsflanke oder bei einer Abstiegsflanke der ersten Magnetfeldsensorsignale erfasst werden.

Optional kann für die Ableitung der ersten Drehgeschwindigkeitsgröße aus der Änderung der Magnetfeldstärke ein Einlernvorgang vorgesehen sein, bei dem zu wenigstens einer vorgegebenen Drehgeschwindigkeit des Rades und/oder Fortbewegungsgeschwindigkeit des Zweirads Kalibrierungsdaten erhoben werden, mit denen die nachfolgend erfassten Änderungen der Magnetfeldstärke verglichen werden. Denkbar ist jedoch auch, dass in Abhängigkeit der Magnetparameter (z.B. Umfangsbreite, Anbringungsort, Entfernung zum Magnetfeldsensor, Stärke des Magnetfelds, Polarisation, Anzahl der verbauten Magnete im Rad), der Magnetfeldsensorparameter (z.B. Auflösungsvermögen, Abstand zum Magneten) oder sonstiger baulicher Parameter (z.B. Rahmengeometrie, Radgröße) aus der Änderung der Magnetfeldstärke auf die Drehgeschwindigkeit und somit die Fortbewegungsgeschwindigkeit des Zweirads geschlossen werden kann.

Bei der vorliegenden Erfindung kann das überwachte Rad mit mehr als einem Magneten ausgestattet sein. Diese Ausgestaltung ermöglicht eine schnellere Erfassung der Drehgeschwindigkeit bzw. der Fortbewegungsgeschwindigkeit des Zweirads, da zwischen den Magnetfeldsensorsignalen der einzelnen Magnete kein vollständiger Umlauf erforderlich ist. So können bei zwei verwendeten Magneten in jedem Umlauf wenigstens zwei Geschwindigkeitsinformationen aus dem Durchlauf des Magneten durch den Erfassungsbereich des Magnetfeldsensors abgeleitet werden (siehe Ausführungen zur ersten Zeitdauer bzw. zur Änderung der Magnetfeldstärke). Eine weitere Möglichkeit, die Drehgeschwindigkeit zu bestimmen, besteht darin, den zeitlichen Abstand des Durchlaufs zweier aufeinander folgender Magnete zu bestimmen. Hierzu ist vorgesehen, die zweiten Magnetfeldsensorsignale zu erfassen, die nach den ersten Magnetfeldsensorsignalen dem nächsten am Erfassungsbereich des Magnetfeldsensors vorbeigedrehten Magneten zugeordnet werden können. Dieser nächste Magnet kann dabei der gleiche Magnet sein, falls nur ein Magnet im überwachten Rad angebracht ist oder ein weiterer Magnet. Zur Ableitung der zweiten Drehgeschwindigkeitsgröße wird dabei der zeitliche Abstand zwischen den ersten und den zweiten Magnetfeldsensorsignalen mittels einer zweiten Zeitdauer erfasst. Abhängig von dieser zweiten Zeitdauer kann direkt die zweite Geschwindigkeitsgröße oder eine weitere Geschwindigkeitsgröße für die Fortbewegung des Zweirads abgeleitet werden. Für den Fall, dass wenigstens zwei Magnete im überwachten Rad angeordnet sind, kann in einem Überprüfungsverfahren geprüft werden, ob die erste und die zweite Geschwindigkeitsgröße im Wesentlichen gleich sind. Dabei sind kleinere Unterschiede durchaus möglich, da durch die unterschiedliche Zeiträume zur Bestimmung der beiden Geschwindigkeitsgrößen durchaus eine Geschwindigkeitsänderung vorgenommen werden kann. Werden die erste und die zweite Geschwindigkeitsgröße ins Verhältnis gesetzt, so muss in Abhängigkeit der Anzahl der verwendeten Magnete ein im Wesentlichen ganzzahliges Vielfaches zwischen der zweiten und der ersten Geschwindigkeitsgröße vorliegen. Dieses Vielfache bzw. die um einen geringen Betrag aufgerundete natürliche Zahl muss dabei der Anzahl der im Rad verbauten Magnete entsprechen. Entspricht dieses Vielfache nicht der Anzahl der Magnete, kann darauf geschlossen werden, dass ein Magnet fehlt oder fehlerhaft ist. Daraufhin wird eine Fehlermeldung erzeugt.

Optional kann vorgesehen sein, dass die Fortbewegungsgeschwindigkeit des Zweirads in Abhängigkeit eines erkannten Fehlers bzw. einer erkannten Fehlermeldung in Abhängigkeit von der ersten Drehgeschwindigkeitsgröße ermittelt wird.

Durch die Überprüfung der Geschwindigkeitsermittlung auf der Basis der zweiten Zeitdauer kann erkannt werden, ob ein Magnet ersetzt oder ausgetauscht werden muss. Weiterhin kann erkannt werden, ob evtl. bewusst ein Magnet entfernt worden ist, um dem System eine zu niedrige Geschwindigkeit vorzugaukeln, die beispielsweise zum Aushebeln einer Geschwindigkeitsbeschränkung für Elektrofahrräder vorgesehen ist. Durch diese Überprüfung kann somit einerseits eine Manipulation erkannt und andererseits verhindert werden, indem die Geschwindigkeitsberechnung auf die erste Zeitdauer ausgerichtet wird.

Weitere Vorteile ergeben sich aus der nachfolgenden Beschreibung von Ausführungsbeispielen bzw. aus den abhängigen Patentansprüchen.

### Kurze Beschreibung der Zeichnungen

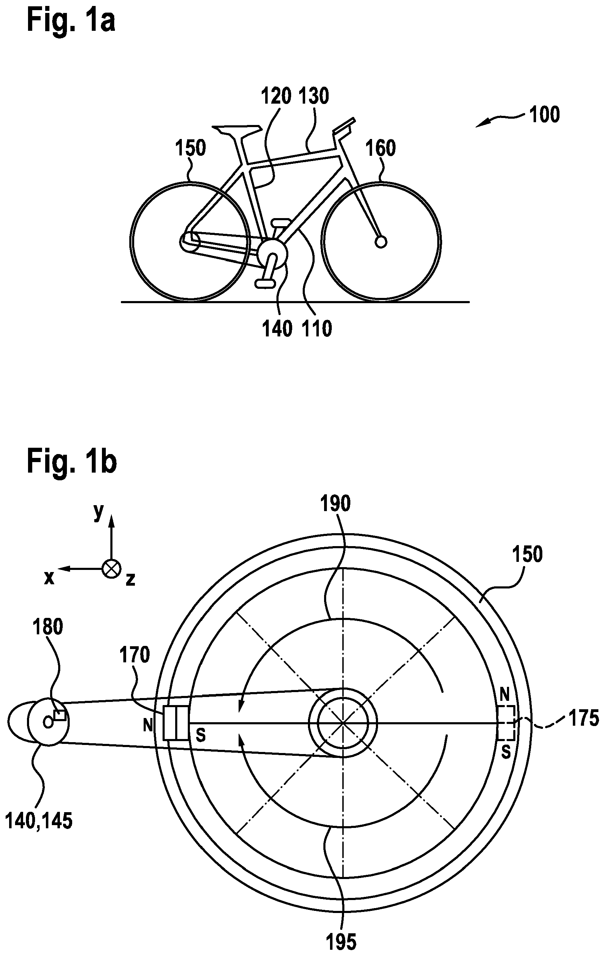

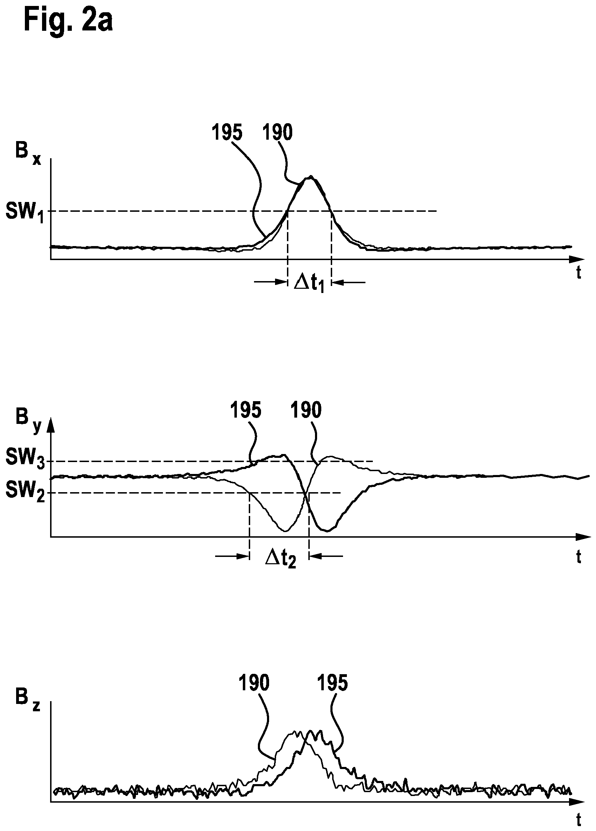

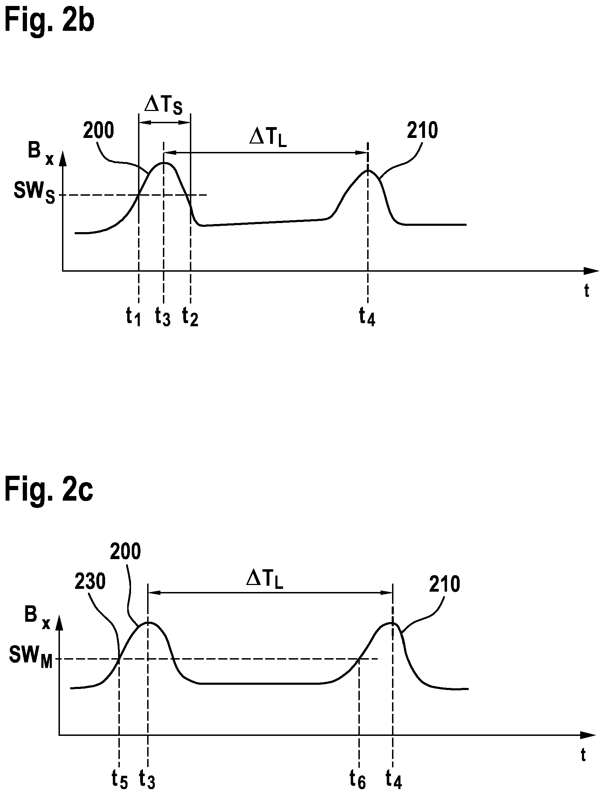

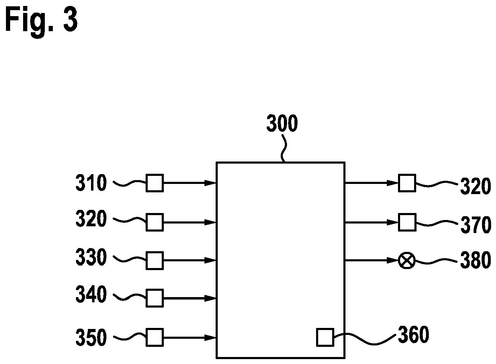

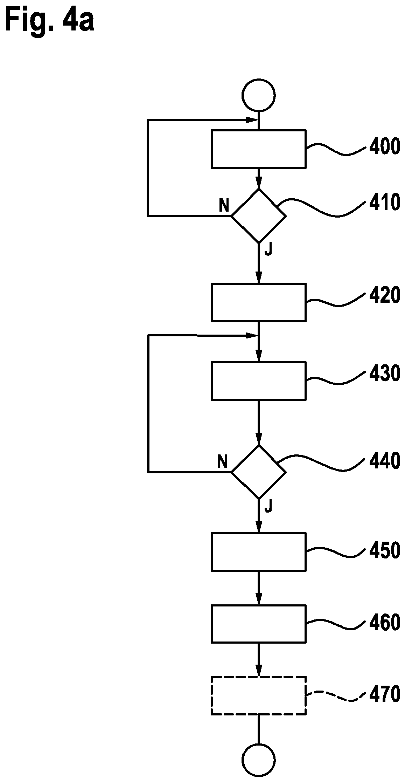

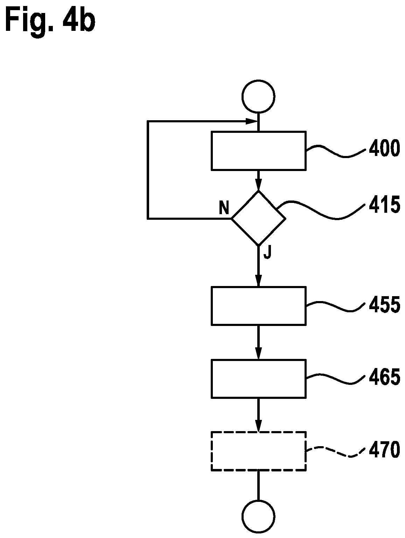

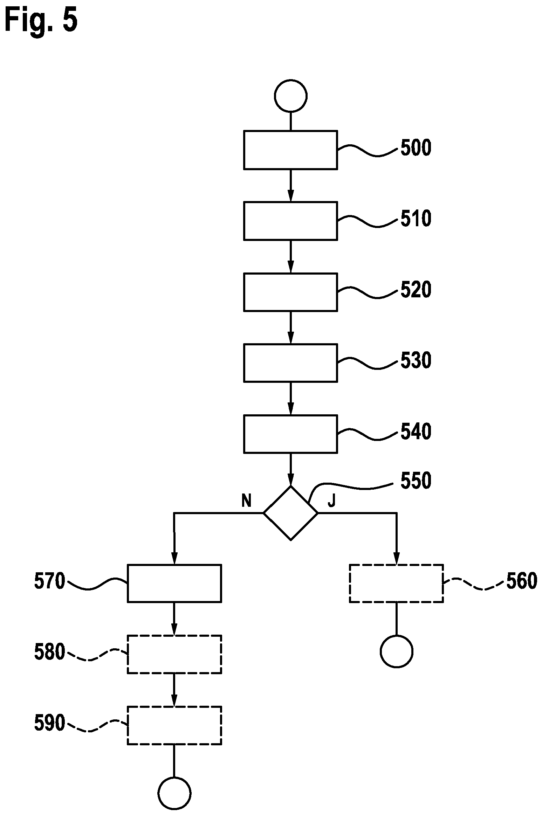

Figur 1a zeigt ein Zweirad, an dem die Erfindung eingesetzt werden kann. Mit der Figur 1b wird eine Detailansicht des Zweirads dargestellt. Die Diagramme der Figur 2a zeigen beispielhaft die erfassten Magnetfeldsensorsignale in den drei Raumrichtungen, während die Diagramme der Figuren 2b und c beispielhaft nur die Bx-Komponenten darstellen. In der Figur 3 ist eine Auswerteeinheit abgebildet, mit der die Bewegungsgröße ermittelt werden kann. In der Figur 4a ist anhand eines Flussdiagramms ein erstes Verfahren dargestellt, welches in der Auswerteeinheit ablaufen kann und eine erste schnelle Geschwindigkeitserfassung beschreibt. Ein alternatives oder optional zusätzliches zweites Verfahren zur schnellen Geschwindigkeitserfassung ist in der Figur 4b beschrieben. Das Verfahren gemäß dem Flussdiagramm in Figur 5, welches ebenfalls in der Auswerteinheit ablaufen kann, dient Plausibilisierungszwecken.

### Ausführungsformen der Erfindung

Die vorliegende Erfindung stellt eine Technologie zur Verfügung, um das Bewegungsverhalten eines Rades eines Zweirads, insbesondere dessen Drehgeschwindigkeit, Drehrichtung und Unregelmäßigkeiten im Drehverlauf festzustellen bzw. zu bestimmen.

In der Figur 1a ist beispielhaft ein Fahrrad 100 als Zweirad dargestellt, an dem die Erfindung gezeigt werden soll. Darüber hinaus kann die Erfindung auch an jedem anderen Zweirad, z.B. einem Motorrad oder einem Elektrofahrrad angewandt werden. Es ist sogar möglich, das Verfahren an einem einachsigen zweirädrigen Fahrzeug anzuwenden, z.B. einem Segway. Der Einsatz bei einem Kraftfahrzeug, z.B. einem Pkw oder Lkw ist ebenfalls möglich.

Das Fahrrad 100 gemäß der Figur 1a ist mit einem Rahmen, bestehend aus Unterrohr 110, Sattelrohr 120 und Oberrohr 130 ausgestattet. Weiterhin weist es eine Tretkurbeleinheit 140 auf, die ein Hinterrad 150 als Antriebs- oder auch Laufrad antreibt. Das Vorderrad 160 dient über den Lenker als Steuerrad, um die Richtung der Bewegung des Fahrrads vorzugeben.

Zusätzlich kann das Fahrrad mit nicht gezeigten Dämpferkomponenten ausgestattet sein, z.B. mit einer ersten Dämpferkomponenten, die der Aufhängung des Hinterrads 150 zugeordnet ist und einer zweiten Dämpferkomponenten, die dem Vorderrad 160 zugeordnet ist. Die erste Dämpferkomponente ist dabei mittels entsprechend beweglicher Elemente derart am Rahmen befestigt, dass das Hinterrad 150 gegenüber dem Rahmen um einen Winkel α gedreht werden kann. Die zweite Dämpferkomponente ermöglicht hingegen, dass das Vorderrad 160 relativ zum Lenker nach unten oder nach oben bewegt werden kann. Beide Dämpferkomponenten erlauben dabei gerade bei der Fahrt im Gelände eine individuelle Anpassung der Räder an den Untergrund. Neben dem besseren Bodenkontakt erhöht sich dadurch auch das Komfortempfinden des Fahrers auf unebenen Wegen, indem Stöße abgefedert werden.

Optional können weitere Dämpferkomponenten vorgesehen sein, die den Fahrkomfort oder die Fahrsicherheit erhöhen. Denkbar sind hier beispielsweise eine Satteldämpfung im Bereich des Sattels, um Stöße vom Untergrund vom Fahrer fern zu halten. Weiterhin ist denkbar, das Lenkrohr mit einem Dämpfer auszustatten, so dass extreme Lenkbewegungen verhindert werden.

In der Figur 1b ist beispielhaft das Hinterrad 150 mit der Tretkurbeleinheit 140 dargestellt, um die Funktionsweise der Erfindung deutlich zu machen. Statt einer einfachen Tretkurbeleinheit 140, bei der lediglich der Radfahrer den Antrieb des Fahrrads mittels der Betätigung der Tretkurbeln aufbringt, kann auch eine Motoreinheit 145 vorgesehen sein, die ganz oder teilweise den Antrieb bzw. Vortrieb des Fahrrads mittels Motorkraft erzeugt. Diese Motoreinheit 145 kann jedoch auch an einer anderen Stelle des Rahmens oder des Fahrradaufbaus angeordnet sein. Denkbar sind hier insbesondere Vorderrad- oder Hinterradantriebe sowie eine Unterbringung im Rahmen. Am Hinterrad 150 ist wenigstens ein Magnet 170 angeordnet, der sich bei der drehenden Bewegung des angetriebenen Rades mit dreht. In einer ersten Varianten ist der Magnet 170 mit seiner Nord-Süd-Richtung radial nach außen am Hinterrad 150 befestigt. Der Vorteil bei dieser Anordnung besteht darin, dass ein größeres Magnetfeld radial nach außen erzeugt wird, welches vom Magnetsensor 180 deutlicher erfasst werden kann. Die konkrete Ausrichtung des Nordpols oder des Südpols nach außen spielt für das erfindungsgemäße Verfahren jedoch keine Rolle. In einer zweiten, alternativen Varianten kann der Magnet 175 mit seiner Nord-Süd-Richtung auch in Umfangsrichtung angeordnet werden. Generell sollte der Magnet 170 bzw. 175 im äußeren Bereich des Hinterrads 150 angeordnet sein. Dies kann dadurch realisiert werden, dass der Magnet 170 bzw. 175 am oder im Mantel untergebracht ist. Alternativ kann der Magnet 170 bzw. 175 jedoch auch an oder in der Felge angebracht sein.

Letzteres hätte den Vorteil, dass der Magnet einem geringeren Verschleiß unterliegt, da er gegenüber der Fahrbahn und der Verwalkung des Mantels geschützt ist. Optional kann vorgesehen sein, mehrere Magnete 170 bzw. 175 im oder am Hinterrad unterzubringen. Hierdurch kann schneller auf das Bewegungsverhalten geschlossen werden, da kein vollständiger Umlauf des Hinterrads 150 notwendig ist. Voraussetzung ist hierbei jedoch, dass die Magnete 170 bzw. 175 in gleicher Nord-Süd-Ausrichtung eingebaut werden.

Der Magnetfeldsensor 180, mit dem die Bewegung des Magnets 170 bzw. 175 über die Änderungen dessen Magnetfelds bei einer Vorwärtsbewegung 190 oder einer Rückwärtsbewegung 195 erfasst wird, kann an unterschiedlichen Stellen am Zweirad bzw. Fahrrad 100 untergebracht, d.h. gekoppelt sein. Durch die Fixierung des Magnetfeldsensors 180 an den Rahmen kann eine relative Bewegung der Magnete zum Rahmen erfasst werden. Zur Erfassung des durch die Drehung veränderlichen Magnetfelds ist eine Anordnung möglichst nahe am Magneten des überwachten Rades zu empfehlen. So kann der Magnetfeldsensor 180 im Bereich der Tretkurbeleinheit 140 aber auch am oder im Gehäuse des Motors 145 angebracht oder integriert sein. Daneben besteht jedoch auch die Möglichkeit, den Magnetsensor 180 an einem anderen Teil des Fahrrads, z.B. dem Rahmen, insbesondere am Unterrohr 110, am Gepäckträger, am Akkumulator, an der Sitzstrebe oder Kettenstrebe zu befestigen.
Mit einem geeigneten Magnetsensor 180 kann die Bewegung des Magneten 170 bzw. 175 am Hinterrad 150 in mehreren Richtungen erfasst werden. So ist zunächst die Erfassung des Magnetfelds des Magneten 170 in Bewegungsrichtung des Fahrrads 100, d.h. in x-Richtung gewünscht, um die Annährung bzw. Entfernung des Magneten 170 bei einem Umlauf des Hinterrads 150 bzw. des Laufrads zu erfassen. Typischerweise wird dabei das Magnetfeld des Magneten 170 nicht während des gesamtem Umlaufs erfasst, sondern ab einer Detektionsgrenze des Magnetsensors 180 innerhalb seines Erfassungsbereichs, der durch sein Auflösungsvermögen bestimmt wird, bis zur maximal erfassbaren Magnetfeldstärke im geringsten Abstand d zum Magnetsensor 180. Weiterhin kann auch die Bewegung des Magneten 170 in senkrechter y-Richtung, d.h. in Bewegungsrichtung des Rades in Richtung der Hochachse des Fahrrads erfasst werden. Mit diesen beiden Richtungen kann die Bewegung des Rades in der xy-Ebene nachverfolgt werden. Auch die Bewegung des Magneten 180 in z-Richtung, d.h. in Querrichtung bzw. quer zur Bewegungsrichtung des Fahrrads 100 kann erfasst werden. Aus diesen Sensorsignalen in z-Richtung, gegebenenfalls in Verbindung mit den Sensorsignalen in zumindest einer anderen Richtung, lassen sich beim Hinterrad 150 Verformungen des Rades ableiten, wie beispielsweise einen Höhenschlag oder einen Seitenschlag. Beim Vorderrad 160 lässt sich über die Erfassung der z-Richtung des entsprechenden Magnetsensorsignals darüber hinaus die Lenkrichtung ableiten.

Der Magnetsensor 180 kann dabei derart gestaltet sein, dass er die Magnetfeldsensorkomponenten Bx, By und Bz in allen drei Raumrichtungen erfassen kann. Eine Erfassung beispielsweise alleine der Bx-Komponenten für die Erfassung der Drehgeschwindigkeit kann unter Umständen nicht ausreichen, wenn gleichzeitig beim überwachten Rad ein Höhen- oder Seitenschlag festgestellt wird. Durch derartige Beschädigungen des Rades kann es zu einem Versatz des Magneten in x- bzw. z-Richtung kommen, die zusammen mit dem berücksichtigten Abstand zwischen Magneten und Magnetfeldsensor zu einer Verfälschung des (Dreh-)Geschwindigkeitssignals führen würde. Daher ist erfindungsgemäß vorgesehen, dass die aktuell erfassten Magnetfeldsensorkomponenten in wenigstens zwei Raumrichtungen voneinander getrennt mit entsprechenden abgespeicherten Magnetfeldsensorsignalen oder entsprechenden Schwellenwerten verglichen werden. Bevorzugt wird für die Erfindung ein kombinierter 3D Magnetfeldsensor eingesetzt. Dieser 3D Magnetfeldsensor kann darüber hinaus mit einem Beschleunigungssensor oder einem Gierratensensor kombiniert sein. Es ist jedoch auch möglich, dass die einzelnen Magnetfeldsensorkomponenten in den drei Raumrichtungen durch jeweils einzelne Magnetsensoren erfasst werden, die jeweils nur in einer Richtung sensitiv für das Magnetfeld sind.

In den Diagrammen der Figur 2a sind typische Messsignalverläufe der Magnetfeldsensorsignale der drei Raumrichtungen x, y und z dargestellt. Die x-Richtung stellt dabei die Richtung dar, in der sich das Fahrrad vorwärts bewegt. Wie bereits erwähnt, repräsentiert die y-Richtung die Hochachse des Fahrrads, während die z-Achse die Querachse abbildet. Zur Ableitung der Drehrichtung des überwachten Rades kann die By-Komponente ausgewertet werden, bei der sich im mittleren Diagramm der Figur 2a im Zeitverlauf bei einer Vorwärtsbewegung 190 eine gegenüber der Rückwärtsbewegung 195 spiegelbildlich unterschiedliche Messwerterfassung ergibt. Dies liegt daran, dass die Magnetfeldlinien unterschiedlich gerichtet sind und somit einen gegenpoligen Sensorwert erzeugen. Aus einer zusätzlichen Information, dass sich das Fahrzeug nach vorne oder nach hinten bewegt, lässt sich somit eine eindeutige Zuordnung des Messwertsignals zu einer Drehrichtung und damit einer Bewegungsrichtung des Fahrrads erzeugen. Die Bx-Komponente im ersten Diagramm zeigt gegenüber der By-Komponente lediglich die Annäherung bzw. die Entfernung des Magneten 160 bzw. 170 vom Magnetfeldsensor 180 an. Die Erfassung der Bz-Komponenten zeigt im unteren Diagramm einen Versatz zwischen der Vorwärtsbewegung 190 und der Rückwärtsbewegung 195. Dieser Versatz ist auf die Einbauposition des Magnetfeldsensors 180 am Motor 145 zurückzuführen und kann als weitere Informationsquelle zur Erfassung eines Vorwärts- oder Rückwärtsfahrt herangezogen werden.

Die Erfassung der Drehgeschwindigkeit des überwachten Rades kann über die Zeitmessung zwischen zwei Magnetfeldsensorsignalen erfolgen. Zur Ableitung der Drehgeschwindigkeit bzw. der Fortbewegungsgeschwindigkeit des Zweirads ist dann nur noch eine Information über die Anzahl der Magnete im Rad, die die Magnetfeldsensorsignale ausgelöst haben, deren Verteilung sowie der Radumfang notwendig. Eine weitere Möglichkeit, die Drehgeschwindigkeit zu erfassen, besteht darin, die Breite des Magnetfeldsensorsignals auszuwerten. An einem ersten Beispiel in der Figur 2a anhand der Magnetfeldkomponenten Bx sei diese Möglichkeit verdeutlicht. Zunächst wird ein Schwellenwert SW1 gewählt, der ausreichend oberhalb des Messrauschens oder etwaiger Fremdeinstreuungen von Magnetfeldern liegt. Überschreitet das Messsignal des Magnetfeldsensors den gewählten Schwellenwert SW1, beginnt die Erfassung eines Zeitraums Δt1, welcher mit einem Unterschreiten des Schwellenwerts SW1 durch die Messsignale endet. Unter Verwendung der Informationen über Magnetbreite in Umfangsrichtung, dem Radumfang sowie dem Abstand zwischen Magnet und Magnetfeldsensor, welche beispielsweise im System abgespeichert sein kann, kann so innerhalb kurzer Zeit auf die Drehgeschwindigkeit und daraus abgeleitet auf die Fortbewegungsgeschwindigkeit des Zweirads geschlossen werden. In einer weiteren Ausgestaltung kann auch nur eine Auswahl der genannten Informationen genutzt werden, um die Fortbewegungsgeschwindigkeit abzuleiten. Zusätzlich kann neben dieser schnellen Erfassung eine langsamere Erfassung der Drehgeschwindigkeit über das zuvor beschriebene Verfahren über die Berücksichtigung des Abstands zweiter aufeinander folgender Magnetfeldsensorsignale verwendet werden. Entsprechend lässt sich eine derartige Geschwindigkeitsberechnung auch aus den Bz Magnetfeldkomponenten ableiten.

Bei der Verwendung der Magnetfeldkomponenten By in y-Richtung ist jedoch darauf zu achten, dass es durch die Bewegung des Magneten in Richtung der Hochachse zu einer Polarisationsumkehr kommt, wie sie im mittleren Diagramm der Figur 2a zu sehen ist. Hierbei kann beispielsweise ebenfalls vorgesehen sein, dass ein einzelner zweiter Schwellenwert SW2 zur Bestimmung des Anfang und des Endes eines entsprechenden Zeitraums Δt2 verwendet wird. Wie aus der Figur 2a zur Magnetfeldkomponente By zu erkennen ist, kann der zweite Schwellenwert SW2 jedoch derart gewählt sein, dass er zunächst zum Start der Messung des Zeitraums Δt2 unterschritten werden muss, bevor er zur Beendigung der Messung überschritten werden muss. Alternativ kann auch vorgesehen sein, dass ein dritter Schwellenwerte SW3 vorgesehen ist, der das Ende der Zeiterfassung bestimmt. Im vorliegenden Beispiel anhand der Magnetfeldsensorsignale der By-Magnetfeldkomponenten kann so vorgesehen sein, dass beide Schwellenwerte SW2 und SW3 bei einer Vorwärtsbewegung durch das Messsignal 190 von oben nach unten unterschritten werden muss. Allgemein kann die Wahl des einzigen Schwellenwerts SW1 bzw. verschiedener Schwellenwerte SW2 und SW3 zur Festlegung des Beginns und des Endes der Zeiterfassung derart ausgelegt sein, dass eine ausreichend große Zeitspanne vorliegt, um aus den Magnetfeldsensorsignalen eine Drehgeschwindigkeit ableiten zu können, ohne eine zu große Fehlertoleranz zu haben.

Die für diese (Dreh-)Geschwindigkeitserfassung notwendigen Schwellenwerte SW1, SW2 und SW3 können fest vorgegeben oder variabel festlegbar sein. So ist denkbar, dass die Schwellenwerte von der zuvor erfassten Geschwindigkeit abhängen, so dass bei einer größeren Geschwindigkeit eine Absenkung der Schwellenwerte initiiert wird, um die Zeitdauer zur Zeiterfassung zu vergrößern. Darüber hinaus können die Schwellenwerte auch abhängig von der maximalen erfassten Magnetfeldstärke oder vom Abstand zwischen Magnet und Magnetsensor festgelegt bzw. verändert werden.

Anhand der Figur 2b ist beispielhaft der Messwertverlauf der Messsignale zweier aufeinander durch den Erfassungsbereich vorbei drehender Magnete anhand der Magnetfeldkomponente Bx dargestellt. Ein ähnlicher Verlauf würde sich auch bei der Auftragung der Absolutmagnetfeldstärke |B| ergeben. Beispielhaft sei hier ein Rad 150 betrachtet, an dem zwei Magnete mit äquidistanten Abständen in Umfangsrichtung angebracht sind. Hierbei würde der erste Magnet den ersten Messpeak 200 und der zweite Magnet den zweiten Messpeak 210 erzeugen. Der Abstand dieser beiden Messpeaks, beispielsweise jeweils beim maximalen Wert zum Zeitpunkt t3 bzw. t4 ergibt sich dann aus der zeitlichen Differenz ΔT_{L}=t4-t3 und stellt ein Maß für die Drehgeschwindigkeit des Rades 150 dar. Statt der Maximalwerte kann dabei auch jeder andere gleichartige Wert der beiden Messpeaks verwendet werden, z.B. indem ein gemeinsamer Schwellenwert SW_{S} verwendet wird, der überschritten werden muss. Aus der Kenntnis der Anzahl sowie der Anordnung der Magnete lässt sich aus der zeitlichen Differenz ΔT_{L} die Drehgeschwindigkeit und somit auch die Fortbewegungsgeschwindigkeit des Zweirads ableiten. So stellt die zeitliche Differenz ΔT_{L} bei zwei verwendeten äquidistant angebrachten Magneten eine halbe Umdrehung des Rades dar. Entsprechend kann die zeitliche Differenz ΔT_{L} bei nur einem oder bei mehreren angeordneten Magneten umgedeutet werden.

Mithilfe eines einzelnen Messpeaks 200 lässt sich, wie in Figur 2b dargestellt, jedoch auch eine schnellere Erfassung der Drehgeschwindigkeit ermöglichen. Hierzu wird ein Schwellenwert SW_{S} verwendet, der bei Überschreiten durch das Magnetfeldsensorsignal, z.B. der Bx-Komponente, eine erste Zeiterfassung zum Zeitpunkt t1 startet. Unterschreiten das Magnetfeldsensorsignal nach diesem Zeitpunkt t1 diesen Schwellenwert SW_{S}, wird die Zeiterfassung zum Zeitpunkt t2 beendet und man erhält die zeitliche Differenz ΔT_{S}. Diese zeitliche Differenz ΔT_{S} steht ebenfalls für ein Maß für die Drehgeschwindigkeit des Rades, allerdings kann die Drehgeschwindigkeit mit diesem Verfahren schneller abgeleitet werden als über das langsamere Verfahren mit der zeitlichen Differenz ΔT_{L}. Die Differenz ΔT_{S} kann alternativ auch mit einen weiteren End-Schwellenwert SW_{E} bestimmt werden, der das Ende der Zeiterfassung bzw. den Zeitpunkt t2 bestimmt. Die Verwendung unterschiedlicher Schwellenwerte zur Bestimmung der Zeitpunkte t1 und t2 kann sinnvoll sein, wenn das Messsignal bzw. der Messpeak nicht gleichförmig ist (siehe hierzu das Messsignal der By-Komponenten im zweiten Diagramm der Figur 2a).

Eine weitere Möglichkeit, die Drehgeschwindigkeit des Rades 150 aufgrund einer schnellen Ableitung aus dem Messsignal bzw. dem erfassten Magnetfeldsensorsignal zu erfassen besteht darin, die Steigung an einem vorgegebenen Punkt des Messpeaks zu bestimmen (siehe hierzu die Figur 2c). Zur Festlegung eines vorgegebenen Punkts 230 kann hierzu ein weiterer Schwellenwert SW_{M} verwendet werden, bei dem beim Überschreiten durch das Magnetfeldsensorsignal zu einem Zeitpunkt t5 die Steigung ml erfasst wird. Aus dieser Steigung ml kann dann auf die Drehgeschwindigkeit des Rades bzw. die Fortbewegungsgeschwindigkeit des Zweirads geschlossen werden. Beim nächsten Durchlauf eines Magneten (des gleichen oder eines anderen) kann dann bei einem erneuten Übersteigen des Schwellenwerts SW_{M} zum Zeitpunkt t6 ein weiterer Steigungswert m2 und somit eine weiteres Maß für die Drehgeschwindigkeit erfasst werden. Die Verwendung eines einheitlichen Schwellenwerts SW_{M} zur Festlegung eines Bestimmungszeitpunkts für die Steigung m hat den Vorteil, dass einheitliche Bedingungen während der Erfassung vorliegen. So spielt bei dieser Form der Geschwindigkeitsableitung die Breite des Messsignalpeaks bzw. der Magnetfeldsensorsignale während des Durchlaufens des Magneten durch den Erfassungsbereich keine Rolle.

Alternativ oder zusätzlich kann auch die absteigende Flanke verwendet werden, um ein Maß für die Drehgeschwindigkeit abzuleiten. Hierbei kann der gleiche Schwellenwert SW_{M} oder ein angepasster Schwellenwert verwendet werden, wobei die Auslösebedingung zur Bestimmung der Steigung das Unterschreiten des entsprechenden Schwellenwerts darstellt.

Da mit den vorliegenden Verfahren mehrere Möglichkeiten zur Erfassung der Drehgeschwindigkeit vorliegen, können die so erhaltenen Drehgeschwindigkeiten auch miteinander verglichen werden. Neben Geschwindigkeitsänderungen, die innerhalb des längeren Zeitraums ΔT_{L} vorkommen können, kann so erkannt werden, ob ein Fehler bei der Erfassung der Magnetfeldsensorsignale aufgetreten ist. Sind beispielsweise für die Auswertung der Drehgeschwindigkeit in Abhängigkeit der zeitlichen Differenz ΔT_{L} mehrere Magnete im überwachten Rad 150 vorgesehen, so stellt sich die Drehgeschwindigkeit, die sich aus der zeitlichen Differenz ΔT_{S} oder der Steigung ml bzw. m2 ableitet, als (ganzzahliges) Vielfaches der Drehgeschwindigkeit dar, die sich aus der zeitlichen Differenz ΔT_{L} ableiten lässt. Dieses Vielfache muss bis auf kleine Änderungen der Anzahl der verwendeten Magnete im überwachten Rad 150 entsprechen. Ist die Differenz zwischen dem Vielfachen und der Anzahl der Magnete jedoch zu groß, z.B. um wenigstens eine ganzzahlige Anzahl, so kann davon ausgegangen werden, dass ein (oder mehrere) Magnete fehlen oder nicht erkannt worden sind. Optional kann die Geschwindigkeitsbestimmung daraufhin entsprechend angepasst werden, um die reale Drehgeschwindigkeit oder Fortbewegungsgeschwindigkeit des Zweirads zu bestimmen.

Denkbar ist auch, dass die Zeitdifferenz ΔT_{L} aus dem Überschreiten der Schwellenwerte SW_{S} und/oder SW_{M} nachfolgender Messpeaks abgeleitet wird.

Weiterhin ist denkbar, dass ein Einlernvorgang vorgesehen ist, um das System zu eichen. Hierzu wird dem Auswertesystem die verbaute Anzahl an Magneten vorgegeben, ein Messwertsignalverlauf bei einer oder mehreren definierten Geschwindigkeit(en) aufgenommen und für Vergleiche abgespeichert. Basierend auf diesem Kalibrierungsvorgang kann beispielsweise eine erkannte Steigung einer (Dreh-)Geschwindigkeit zugeordnet werden.

Mit der Figur 3 wird eine Auswerteeinheit 300 gezeigt, z.B. eine Verarbeitungseinheit oder eine Steuereinheit, die aus den erfassten Magnetfeldsensordaten eine Bewegungsgröße ableitet. Hierzu werden in der Auswerteeinheit 300, die typischerweise eine Recheneinheit und einen Speicher 360 aufweist, die Sensorsignale des Magnetfeldsensors 310 bzw. 180 eingelesen. Mit dem Magnetfeldsensor 310 können gleichzeitig alle drei Magnetfeldkomponenten Bx, By und Bz gleichzeitig erfasst und in die Auswerteinheit 300 eingelesen werden. Es ist jedoch auch möglich, dass die unterschiedlichen Magnetfeldkomponenten durch zwei oder drei unterschiedliche Magnetfeldsensoren erfasst werden. Denkbar ist beispielsweise, dass ein Magnetfeldsensor sowohl die Magnetfeldkomponenten in x- als auch in y-Richtung erfasst, während ein zweiter Magnetfeldsensor nur die Magnetfeldkomponente in z-Richtung erfasst. Weiterhin kann die Auswerteeinheit 300 eine Information darüber erhalten, dass sich das Fahrrad bewegt bzw. in welcher Richtung es sich bewegt. Hierzu können interne Informationen herangezogen oder extern abgefragt werden. So ist denkbar, dass eine Information über die Tätigkeit einer Antriebseinheit 320 (bzw. des Motors 145) gemäß der Figur 1b erfasst wird. Indem erfasst wird, dass sich die Antriebseinheit 320 im regulären Antriebsmodus befindet, kann davon ausgegangen werden, dass sich das Fahrrad vorwärts bewegt. Entsprechend kann auch eine Information über eine Betätigung der Antriebseinheit 320 bei einem Rückwärtsfahren dazu genutzt werden, die Bewegungsrichtung der erfassten Messsignale zuzuordnen. Darüber hinaus können noch weitere Informationen erfasst werden, die für die weitere Auswertung oder eine Steuerung/Regelung in Abhängigkeit der erfassten Drehrichtungsinformation hilfreich sind. So kann die manuelle oder elektrische Betätigung eines Start- bzw. Initiierungsbuttons 330 erfasst werden. Optional können ebenfalls zusätzliche Sensorsignale von einem Lenkwinkelsensor 340, einem Neigungssensor oder einem Beschleunigungssensor 350 erfasst werden.

Nach der Erfassung der Bewegungsrichtung und der Auswertung der Magnetfeldsensorsignale in einer definierten Einlernphase, kann diese Zuordnung für spätere Auswertungen und Vergleiche in dem Speicher 360 abgelegt werden. So können anschließend die erneut erfassten Magnetfeldsensorsignale des Magnetfeldsensors 310 ohne zusätzliche Bewegungsinformationen dazu genutzt werden, die Drehrichtung des Hinterrads 150 sowie die Bewegungsrichtung des Fahrrads zu erkennen. Diese Information kann dazu genutzt werden, verschiedene Komponenten 370 des Fahrrads anzusteuern oder zu optimieren. Diese Ansteuerung kann dabei direkt über die Auswerteeinheit 300 erfolgen oder über die Weitergabe der Bewegungsgröße an ein entsprechendes Steuergerät. So können die Dämpfungseigenschaften eines Stoßdämpfers in Abhängigkeit der erkannten Bewegungsgröße variiert werden. Auch eine Ansteuerung einer Bremse ist hier möglich. Weiterhin ist eine Ausgabe der Bewegungsgröße über eine Anzeige 380 oder eine akustische Warnvorrichtung möglich, falls die Bewegungsgröße ein abnormales Verhalten anzeigt. Die Anzeige kann dabei ein Display, ein Navigationsgerät oder ein Smartphone sein. Der Fahrer hat anschließend aufgrund der Information über das Bewegungsverhalten die Möglichkeit, das Rad zu reparieren oder es auszutauschen.

In einer Ausführungsform der Erfindung kann vorgesehen sein, dass die Einlernphase gezielt vom Fahrer oder einem im Fahrrad befindlichen System gestartet bzw. iniitiert wird. Hierzu kann die Antriebseinheit 320 gezielt angesteuert werden, um eine Vorwärtsbewegung 190 zu erzeugen, mit der die dann erhaltenen Messgrößen des Magnetfeldsensors einem bevorzugten Bewegungsmuster zugeordnet werden können. Entsprechend könnte hier auch eine gezielte Rückwärtsbewegung gestartet werden.

In einer weiteren Ausführungsform der Erfindung ist keine separate Einlernphase notwendig, wenn die Polarisation des Magneten, d.h. die Ausrichtung der Polarisation beim Einbau bekannt und in der Vorrichtung 300 bzw. dem Speicher 360 gespeichert ist.

Die Auswerteeinheit 300 ist dazu eingerichtet, aus den erfassten Magnetfeldsensorsignalen direkt die Drehgeschwindigkeit des überwachten Rades und gegebenenfalls mit der Kenntnis über den Radumfang daraus abgeleitet die Geschwindigkeit des Zweirads, zum Beispiel eines Elektrofahrrads zu ermitteln. Hierzu werden beispielsweise aufeinander folgende Magnetfeldsensorsignale verwendet, die durch den wenigstens einen Magneten 170 bzw. 175 im überwachten Rad im Magnetfeldsensorelement 180 erzeugt werden. Sind mehrere Magnete im Rad angeordnet, ist nur eine Teilumdrehung des Rades notwendig, um die Drehgeschwindigkeit abzuleiten. Vorteilhafterweise werden die Magnete dabei gleichmäßig entsprechend der Radumfangsfläche verteilt. Eine derartige Verteilung hat auch den Vorteil, dass Änderungen in der Drehgeschwindigkeit zu jedem Zeitpunkt schneller erkannt werden können, da kein vollständiger Umlauf des Rades erforderlich ist. Zur korrekten Auswertung der Zeitabstände zwischen den Magnetfeldsensorsignalen ist jedoch erforderlich, dass die Auswerteeinheit, z.B. die Vorrichtung 300, Zugriff auf die Anzahl, den Anbringungsort am Rad sowie den Umfang des Rades hat. Derartige Daten können im Speicher 360 abgelegt sein und gegebenenfalls auch durch den Fahrer eingebbar gestaltet sein.

Bei der Erfassung von Magnetfeldsensorsignalen sowohl eines Magneten am Vorderrad 120 als auch am Hinterrad 130 ist es für die Auswerteeinheit 300 erforderlich, dass die erfassten Messwerte eindeutig den entsprechenden an den Rädern verbauten Magneten zugeordnet werden können. Dies kann dadurch erreicht werden, dass die Magnete im Vorderrad und Hinterrad unterschiedlich gestaltet sind, so dass sich die Messwerte der Magnetfeldstärke voneinander separieren lassen. So ist denkbar, jeweils unterschiedliche minimale Abstände zwischen den Magneten und dem Magnetfeldsensor vorzusehen. Eine weitere Möglichkeit, unterschiedliche Sensorsignale zu erzeugen, besteht darin, die Magnete unterschiedlich stark auszulegen oder die Geometrien zu variieren. So würden längere oder breitere Magnete in Bezug auf den Radumfang entsprechend breitere Messwertsignalverläufe erzeugen. Auch die unterschiedliche Polarisation der Magnete im Vorder- und Hinterrad würde eine eindeutige Zuordnung im Messwertsignalverlauf erzeugen.

Entsprechend könnte man auch bei der Verwendung von mehreren Magneten in den Rädern vorgehen, um die zeitliche Auflösung bzw. schnellere Ableitung von Veränderungen zu erkennen. Hier ist beispielsweise auch denkbar, jeweils einen der mehreren Magneten in einem Rad bewusst anders zu gestalten, um einen vollständigen Umlauf und ggf. eine Normierung erzeugen zu können, gerade bei der Verwendung einer unbekannten Anzahl von Magneten. Ansonsten kann selbstverständlich auch über die Kenntnis der Anzahl der Magnete auf einen vollständigen Umlauf geschlossen werden.

Die erfassten Magnetfeldsensorsignale können auch hinsichtlich ihres zeitlichen Verhaltens dazu verwendet werden, die Drehgeschwindigkeit des Rades und daraus die Geschwindigkeit des Zweirads abzuleiten. So kann bei der Kenntnis der Umfangsbreite des wenigstens einen Magneten aus der Signalbreite der Magnetfeldsensorsignale ein Maß für die Drehgeschwindigkeit abgeleitet werden. Hierbei kann vorgesehen sein, dass ein Schwellenwert vorgesehen ist, der bei Überschreiten das Vorliegen eines Magnetfeldsensorsignals in Abhängigkeit des Durchgangs des Magneten in Erfassungsreichweite anzeigt. Entsprechend kann der gleiche Schwellenwert verwendet werden, um bei einem nachfolgenden Unterschreiten das Heraustreten des Magneten aus dem Erfassungsbereich anzuzeigen. Aus der zeitlichen Differenz beider Schwellwertvergleiche kann so in Abhängigkeit von der Umfangslänge des Magneten auf die Drehgeschwindigkeit geschlossen werden. Hierzu können zusätzlich noch der geringste Abstand zwischen Magnet und Magnetfeldsensor als auch der Reifenumfang herangezogen werden.

Optional kann auch vorgesehen sein, dass die Schwellenwerte zur Feststellung des Erreichens und des Verlassen der Erfassungsreichweite unterschiedlich ausgestaltet sind. So ist beispielsweise anhand der Magnetfeldsignale By in Figur 2b deutlich erkennbar, dass je nach Ausrichtung des Magneten am oder im Rad unterschiedliche Schwellenwerte gewählt werden müssen. Bei der Verwendung der Bx- oder Bz-Komponenten des Magnetfeldsensorsignals kann dagegen jeweils ein einheitlicher Schwellenwert zur Festlegung der Zeitdauer im Erfassungsbereich ausreichen.

Generell können die Schwellenwerte fest gewählt oder in Abhängigkeit von den Eigenschaften des verwendeten Magneten, den Eigenschaften des Magnetfeldsensors, dem maximalen Wert der erfassten Magnetfeldstärke und/oder dem Abstand zwischen Magnet bzw. Hinterrad und Magnetfeldsensor eingestellt werden.

Mit der Erfassung der Signalbreite der Magnetfeldsensorsignale können bei der Verwendung jeweils eines Magneten zwei unterschiedliche Geschwindigkeitserfassungen während eines Umlaufs realisiert werden. Neben der üblichen (langsamen) Drehbewegungserfassung durch die Sensorsignalerfassung nach einem vollständigen Umlauf ergibt sich so auch eine (schnelle) Drehbewegungserfassung während sich der eine Magnet in der Erfassungsreichweite des Magnetfeldsensors befindet. Werden mehrere Magnete in dem Rad angeordnet, kann somit die Erfassungszeit für die Drehgeschwindigkeit des Rades bzw. die Fortbewegungsgeschwindigkeit des Zweirads deutlich erhöht werden.

Eine weitere Möglichkeit, eine schnelle Drehbewegungserfassung zu realisieren besteht darin, die Steigung der Flanke der erfassten Magnetfeldsensorsignale beim Durchlauf des Magneten im Erfassungsbereich des Magnetfeldsensorelements zu bestimmen. Diese Steigung ist ebenfalls abhängig von der Geschwindigkeit, mit der sich der Magnet im Rad dreht. Optional kann hier ein Einlernvorgang vorgeschaltet werden, bei dem zu einer vorgegebener Geschwindigkeit eine Flanke bzw. Steigung erfasst und für weitere Vergleich abgespeichert wird. Bei diesem Einlernvorgang kann auch vorgesehen sein, dass die Magnetfeldsensorsignale für mehrere vorgegebene Geschwindigkeiten erfasst und abgespeichert werden.

Die Erfassung zweier unterschiedlicher Drehbewegungserfassungen kann auch dazu genutzt werden abzuleiten, wie viele Magnete im überwachten Rad verbaut sind. So kann ein Vergleich der schnellen mit der langsamen Drehbewegungserfassungen durchgeführt werden, um zu erkennen, ob die daraus ermittelten Drehgeschwindigkeiten im Wesentlichen gleich oder ein Vielfaches voneinander sind. Stimmen beide Drehgeschwindigkeiten im Wesentlichen überein, abgesehen von einer kurzfristigen Geschwindigkeitsänderung, die beispielsweise über eine zusätzliche Bremsinformation abgefragt werden kann, so ist lediglich ein Magnet im überwachten Rad angeordnet. Entspricht die Geschwindigkeit der langsamen Drehbewegungserfassung jedoch einem Vielfachen der schnellen Drehbewegungserfassung , so zeigt der damit verbundene Faktor die Anzahl der im überwachten Rad angeordneten Magnete an. Diese Zahl kann gegebenenfalls mit einer im Speicher abgelegten Anzahl verglichen werden, um Manipulationen durch Entfernen einzelner Magnete zu erkennen. Wird eine derartige Manipulation festgestellt, kann die daraus erzeugte Fortbewegungsgeschwindigkeit entweder auf den richtigen Wert angepasst werden oder es kann eine Fehlerinformation erzeugt werden. Diese Fehlerinformation kann dann beispielsweise dazu genutzt werden, die Ansteuerung eines Motors eines Elektrofahrrads zu unterbinden, um die gesetzlichen Vorgaben bei der Geschwindigkeitsbeschränkung nicht zu überschreiten.

In den Flussdiagrammen der Figuren 4a, 4b und 5 sind Verfahren beschrieben, die in der Auswerteeinheit 300 ablaufen können und auf der Basis der Signalbreite der Magnetfeldsensorsignale ein Maß für die Drehgeschwindigkeit des überwachten Rades und die Fortbewegungsgeschwindigkeit des Zweirads erzeugen. Darüber hinaus kann die Auswerteinheit 300 insbesondere mit dem Verfahren der Figur 5 die Anzahl der verwendeten Magnete in dem überwachten Rad erfassen und gegebenenfalls die Geschwindigkeitswerte kontrollieren, falls ein Unterschied zu vorgegebenen Werten erkannt wird.

Die Auswerteeinheit 300 erfasst gemäß einem ersten erfindungsgemäßen (Geschwindigkeitserfassungs-)Verfahren der Figur 4a zunächst mittels des Magnetfeldsensors 310 in einem Schritt 400 das Magnetfeldsensorsignal I_{M,S} des wenigstens einen Magneten 170 bzw. 175 in wenigstens einer Raumrichtung oder in Form eines Absolutwertes. Der Absolutwert des Magnetfelds kann in einer ersten Näherung verwendet werden, jedoch können bei fehlerhaften Drehbewegungen des überwachten Rades z.B. bei einem Seitenschlag oder einem Höhenschlag Abweichungen gegenüber einer reinen Betrachtung der Bx- bzw. By-Komponenten auftreten, die unter Umstände die Auswertung der Magnetfeldsensorsignale bei einer größeren Anzahl von vorhandenen Magneten für das in den Figuren 4a, 4b und 5 beschriebene Verfahren mit einer größeren Unsicherheit belasten. Daher wird bevorzugt das Magnetfeldsensorsignale I_{M,S} in zumindest einer Raumrichtung erfasst, entweder Bx oder By (siehe hierzu u.a. die Figur 2b). Die zweite Raumrichtung kann herangezogen werden, um eine Redundanz bzw. eine bessere Genauigkeit bei der Erfassung zu ermöglichen. Nach Beginn der Erfassung des Magnetfeldsensorsignal I_{M,S} wird im nächsten Schritt 410 ein Vergleich des Magnetfeldsensorsignal I_{M,S} mit einem Start-Schwellenwert SW_{S} in zumindest einer Raumrichtung oder mit seinem Absolutwert durchgeführt. Dabei kann wie in der Kurve 190 in der Figur 2a bei der Magnetfeldkomponenten Bx ein Überschreiten des Start-Schwellenwerts SW1 oder wie bei der Kurve 190 bei der Magnetfeldkomponenten By ein Unterschreiten des Start-Schwellenwerts SW2 die Zeiterfassung zum Zeitpunkt t1 in nächsten Schritt 420 starten. Falls der Vergleich im Schritt 410 negativ ist, d.h. die Startbedingung der Zeiterfassung nicht erfüllt ist, kann die Erfassung von Magnetfeldsensorsignalen I_{M,S} in Schritt 400 erneut durchgeführt werden. Alternativ können auch die Schritte 400 und 410 zusammengefasst werden und der nächste Schritt 420 erst bei Vorliegen der Vergleichsbedingung des Schritts 410 durchgeführt werden. Nach dem Festlegen des Startzeitpunkts t1 werden im nächsten Schritt 430 weitere Magnetfeldsensorsignale I_{M,S} erfasst. Diese erfassten Magnetfeldsensorsignale I_{M,S} werden im nachfolgenden Vergleichsschritt 440 mit einem End-Schwellenwert SW_{E} verglichen. Auch hier kann wieder, je nach Signalverlauf oder nach vorgegebenen Kriterien zur Festlegung der auswertbaren Signalbreite ein Über- oder Unterschreiten des End-Schwellenwerts SW_{E} als Endbedingung der Erfassung gewertet werden (siehe beispielhaft die Schwellenwerte SW1, SW2 und SW3). Dabei kann der End-Schwellenwert SW_{E} dem Start-Schwellenwert SW_{S} entsprechen oder sich von diesem unterscheiden. Wird die End-Bedingung der Zeiterfassung im Schritt 440 nicht erreicht, so können im Schritt 430 erneut Magnetfeldsensorsignale I_{M,S} erfasst werden. Wie bereits bei den Schritten 400 und 410 können auch die Schritte 430 und 440 in einem gemeinsamen Verfahrensschritt durchgeführt werden. Bei einem positiven Vergleich im Schritt 440, d.h. bei einer Erfüllung der End-Bedingung wird im nächsten Schritt 450 die Zeiterfassung zum Zeitpunkt t2 beendet und eine erste Zeitdauer ΔT_{S}=t2-t1 berechnet. Die erste Zeitdauer ΔT_{S} repräsentiert dabei die Signalbreite der Magnetfeldsensorsignale I_{M,S}, die während des Durchlaufens des wenigstens einen Magneten im überwachten Rad erfasst worden sind. Die erfasste Signalbreite und somit die erste Zeitdauer ΔT_{S} lässt sich durch eine geeignete Wahl der Schwellenwerte SW_{S} und SW_{E} variieren. So ist denkbar, wenigstens einen der beiden Schwellenwerte in Abhängigkeit von der Magnetfeldstärke des verwendeten Magneten, der Umfangbreite des überwachten Magneten, des Auflösungsvermögens des Magnetfeldsensors, dem Abstand zwischen Magnet und Magnetfeldsensor und/oder der Drehgeschwindigkeit des überwachten Rades festzulegen oder zu variieren. In Abhängigkeit von der erfassten ersten Zeitdauer ΔT_{S} kann im nächsten Schritt 460 eine Berechnung der Drehgeschwindigkeit des überwachten Rades und/oder eine Fortbewegungsgeschwindigkeit des dazu gehörigen Zweirads durchgeführt werden. Hierzu können weitere Parameter wie beispielsweise die Umfangbreite des überwachten Magneten, die Reifengröße und/oder der Abstand zwischen Magnet und Magnetsensor verwendet werden, die im Speicher 360 der Auswerteeinheit 300 abgelegt sein können.

Optional kann in einem weiteren Schritt 470 die Information über die Geschwindigkeit des Rads oder des Zweirads von der Auswerteeinheit 300 an eine optische Ausgabe 380 ausgegeben werden. Alternativ oder zusätzlich ist auch eine Weitergabe dieser Geschwindigkeitsinformation an eine Steuereinheit zur Ansteuerung eines Motors eines Elektrofahrrads möglich.

In einer alternativen Ausführung des Verfahrens nach Figur 4b können die Schwellenwerte SW_{S} und SW_{E} in einer Raumrichtung der Magnetfeldsensorsignale auch durch die Berücksichtigung der Magnetfeldsensorsignal in einer zweiten Raumrichtung festgelegt werden. So ist beispielsweise denkbar, dass die Schwellenwerte für die Magnetfeldsensorsignale Bx in Abhängigkeit der Maximalwerte der Magnetfeldsensorsignale By festgelegt werden (siehe oberes und mittleres Diagramm der Figur 2). In einem anderen Beispiel kann der Schwellenwerte SW_{E} für die Magnetfeldkomponente Bx in Abhängigkeit des Nulldurchgangs der Magnetfeldkomponente By festgelegt werden. Entsprechend umgekehrt können die Schwellenwerte SW_{S} und SW_{E} bei der Auswertung der Magnetfeldkomponenten By in Abhängigkeit des Überschreitens des Schwellenwerts SW1 in der Magnetfeldkomponenten Bx erfolgen.

Ein weiteres erfindungsgemäßes Verfahren zur schnellen Geschwindigkeitserfassung soll mit dem Flussdiagramm der Figur 4b beschrieben werden, welches zusätzlich oder alternativ zum Verfahren gemäß der Figur 4a in der Auswerteeinheit 300 ablaufen kann. Hierbei wird wie gemäß dem Verfahren nach Figur 4a zunächst mittels des Magnetfeldsensors 310 in einem Schritt 400 das Magnetfeldsensorsignal I_{M,M} des wenigstens einen Magneten 170 bzw. 175 in wenigstens einer Raumrichtung oder in Form eines Absolutwertes erfasst. Hierbei wird bevorzugt lediglich die Magnetfeldkomponente Bx erfasst (siehe Figur 2c). Nach Beginn der Erfassung des Magnetfeldsensorsignals I_{M,M} wird im nächsten Schritt 415 ein Vergleich des Magnetfeldsensorsignals I_{M,M} mit einem Schwellenwert SW_{M} durchgeführt.

Überschreitet das Magnetfeldsensorsignal I_{M,M} den Schwellenwert SW_{M} im Punkt 230 zum Zeitpunkt t5 wird im nächsten Schritt 455 an diesem Punkt 230 bzw. zu diesem Zeitpunkt t5 die Steigung m des Magnetfeldsensorsignals I_{M,M} bestimmt, z.B. in Figur 2c die Steigung ml während des ersten Messsignalpeaks und m2 während des nächsten Messsignalspeaks zum Zeitpunkt t6. Falls das Magnetfeldsensorsignal I_{M,M} den Schwellenwert SW_{M} nicht überschreiten, wird erneut mit dem Schritt 400 ein neues Magnetfeldsensorsignal I_{M,M} bestimmt. Alternativ können die Schritte 400 und 415 zusammengefasst werden und der nächste Schritt 455 erst bei Vorliegen der Vergleichsbedingung des Schritts 415 durchgeführt werden. Mit dieser Zusammenlegung wird zunächst der gesamte Messsignalpeak erfasst, um anschließend eine Auswertung durchzuführen. Nach der Bestimmung der Steigung m wird im nächsten Schritt 465 in Abhängigkeit von der Steigung m die Drehgeschwindigkeit des überwachten Rades 150 und/oder die Fortbewegungsgeschwindigkeit des Zweirads berechnet.

Optional kann in einem weiteren Schritt 470 die Information über die Geschwindigkeit des Rads oder des Zweirads von der Auswerteeinheit 300 an eine optische Ausgabe 380 ausgegeben werden. Alternativ oder zusätzlich ist auch eine Weitergabe dieser Geschwindigkeitsinformation an eine Steuereinheit zur Ansteuerung eines Motors eines Elektrofahrrads möglich.

In dem Verfahren der Figur 5, welches ebenfalls in der Auswerteeinheit 300 ablaufen kann, wird zunächst die erste Zeitdauer ΔT_{S} und optional die Drehgeschwindigkeit des Rades bzw. die Fortbewegungsgeschwindigkeit des Zweirads, insbesondere eines Elektrofahrrads, gemäß dem Verfahren der Figur 4a eingelesen. Anschließend wird ausgehend von den erfassten Magnetfeldsensorsignalen I_{M,L} eines Magneten während eines Erfassungsdurchgangs ein dritter Zeitpunkt t3 festgelegt. Dieser Vorgang kann beispielsweise in einem Unterverfahren durchgeführt werden, so dass der nachfolgende Schritt 520 der Erfassung der Magnetfeldsensorsignale I_{M,L} während des nächsten Durchgangs eines bzw. des Magneten an der Erfassung des Magnetfeldsensors erst dann durchgeführt wird, wenn ein charakteristischer und reproduzierbarer Sensorwert zur Festlegung eines Zeitpunkts innerhalb der Signalbreite erkannt worden ist. Im Schritt 520 wird in Abhängigkeit der Erfassung der nächsten Magnetfeldsensorsignale I_{M,L}, die entweder nach einer vollständigen Umdrehung des überwachten Rades durch den gleichen Magneten oder bei Vorliegen von mehreren Magneten im Rad durch den nächsten Magneten erzeugt werden, nach den gleichen Kriterien wie der dritte Zeitpunkt t3 ein vierter Zeitpunkt t4 festgelegt. Auch dieser Schritt 520 zur Erfassung der Magnetfeldsensorsignale I_{M,L} kann mittels eines Unterverfahrens so lange durchgeführt werden, bis der vierte Zeitpunkt t4 festgelegt wurde. Im nächsten Schritt 530 wird eine zweite Zeitdauer ΔT_{L}=t4-t3 ermittelt. Abgesehen von kleineren Geschwindigkeitsänderungen während der Erfassung der ersten und zweiten Zeitdauer ΔT_{S} und ΔT_{L} müssten bei der Verwendung eines einzelnen Magneten im überwachten Rad diese beiden Zeitdauern im Wesentlichen übereinstimmen. Sollten hingegen mehrere Magnete im überwachten Rad vorhanden sein, müsste die Zeitdauer ΔT_{S} ein Vielfaches der zweiten Zeitdauer ΔT_{L} sein. Zur Überprüfung und gegebenenfalls zur Korrektur der erfassten Geschwindigkeit wird im nächsten Schritt 540 das Verhältnis F=ΔT_{L}/ΔT_{S} gebildet. Alternativ kann auch aus der ersten Zeitdauer die erste Geschwindigkeitsgröße und aus der zweiten Zeitdauer die zweite Geschwindigkeitsgröße abgeleitet werden, wobei das Verhältnis F aus dem entsprechenden relativen Verhältnis beider Geschwindigkeitsgrößen gebildet wird. Bis auf kleinere Rundungsungenauigkeiten sowie einer kurzfristigen Geschwindigkeitsänderung sollte der Faktor F der Anzahl der im Rad verbauten Magnete entsprechen. Im nächsten Schritt 550 wird daher überprüft, ob der Faktor F der im Speicher 360 der Auswerteeinheit 300 für das überwachte Rad hinterlegten Anzahl an Magneten entspricht. Wird erkannt, dass der Faktor F der Anzahl der Magnete entspricht, gegebenenfalls mit einer geringen Abweichung im Nachkommabereich, kann das Verfahren beendet werde. Optional kann hier die Auswerteinheit auch eine Statusmeldung im Schritt 560 erzeugen, z.B. für Informations- oder Wartungszwecke. Wird jedoch im Schritt 550 erkannt, dass eine Abweichung zwischen dem Faktor F und der vorgesehenen Anzahl an Magneten im überwachten Rad vorliegt, gegebenenfalls auch unter Berücksichtigung einer ausreichenden Abweichung durch eine Geschwindigkeitsänderung während der Erfassung beider Zeitdauern, wird im Schritt 570 durch die Auswerteeinheit 300 eine Fehlermeldung erzeugt. Diese Fehlermeldung kann dem Fahrer oder einem Wartungsdienst anzeigen, dass ein vorgesehener Magnet im überwachten Rad fehlt und ersetzt werden muss. Weiterhin kann die Fehlermeldung auch eine falsche Geschwindigkeitsermittlung des Zweirads anzeigen. Hierzu kann in einem optionalen weiteren Schritt 580 die Ansteuerung einer Antriebseinheit am Zweirad, z.B. einem Elektromotor an einem Elektrofahrrad, unterbunden werden, so dass eine bauartbedingte vorgeschriebene Fahrzeuggeschwindigkeit nicht überschritten werden kann. Es ist jedoch auch möglich, dass der Antrieb auf ein Minimum begrenzt wird, bei dem gerade keine Geschwindigkeitsüberschreitung vorliegen kann. Weiterhin ist möglich, dass in Abhängigkeit des erkannten Fehlers in Schritt 570 eine Umschaltung der Geschwindigkeitserfassung auf ein weiteres System vorgesehen ist. Hierdurch könnte die Antriebseinheit des Zweirads ohne Einschränkungen weiter betrieben werden. Optional oder zusätzlich kann in einem weiteren Schritt 590 die ermittelte Geschwindigkeit auch angepasst werden. Hierzu kann im Wesentlichen die erste Zeitdauer ΔT_{S} herangezogen werden.

Alternativ kann das Verfahren gemäß der Figur 5 auch mit der im Verfahren nach Figur 4b ermittelten Drehgeschwindigkeit durchgeführt werden. Hierbei wird im Schritt 500 die ermittelte Steigung, die daraus abgeleitete Drehgeschwindigkeit des überwachten Rades oder die Fortbewegungsgeschwindigkeit des Zweirads erfasst. Im Schritt 540 wird jedoch nicht das Verhältnis der erfassten Zeitdifferenzen gebildet, sondern das Verhältnis der aus der Steigung m abgeleiteten Drehgeschwindigkeit und der aus der zweiten Zeitdauer ΔT_{L} abgeleiteten Drehgeschwindigkeit. Auch hier ergibt sich im Wesentlichen ein ganzzahliges Vielfaches, wenn keiner der vorgesehenen Magnete im überwachten Rad fehlt. Entsprechend kann dann mit dem Schritt 550 weiter verfahren werden. Die gleiche Auswertung ist ebenfalls möglich, wenn im Schritt 540 aus der Steigung m bzw. der zweiten Zeitdauer ΔT_{L} direkt auf die Fortbewegungsgeschwindigkeit des Zweirads geschlossen wird.

In einer weiteren Ausführung kann vorgesehen sein, dass das Verfahren der Figur 5 dazu verwendet wird, um die Anzahl der Magnete im überwachten Rad 150 zu bestimmen. Hierzu werden die Schritte 500 bis 540 durchgeführt, wobei der Schritt 540 ein Abspeichern der Anzahl der Magnete im Speicher 360 der Auswerteinheit 300 beinhaltet. Dieses Vorgehen bietet sich bei der Erstinbetriebnahme oder nach einem Austausch des überwachten Rades an. Optional kann dieses Auswertung automatisch bei der Erkennung bestimmter Wartungsarbeiten durchgeführt werden oder manuell vom Fahrer initiiert werden.

In einer weiteren Ausführungsform der Erfindung verwendet die Auswerteeinheit statt der Signalbreite der Magnetfeldsensorsignale die typische Pulsform der Messwerte bei einem Durchgang des Magneten durch den Erfassungsbereich des Magnetfeldsensors, um die (Dreh-)geschwindigkeit abzuleiten.

## Patentansprüche

1. Verfahren zur Erfassung einer Drehgeschwindigkeit eines Rades (150, 160) eines Zweirads (100), insbesondere eines Fahrrads, wobei das Zweirad (100) einen mit dem Rahmen (110, 120,130, 140) gekoppelten Magnetfeldsensor (180, 310) und wenigstens ein Rad (150, 160) mit wenigstens einem Magneten (170, 175) aufweist, wobei zur Erfassung der Drehgeschwindigkeit
• mittels des Magnetfeldsensors (180, 310) in Abhängigkeit von der Drehbewegung des wenigstens einen Rades (150, 160) erste Magnetfeldsensorsignale (I_{M,S}, I_{M,M}) des wenigstens einen Magneten (170, 175) erfasst werden, und
• ein Vergleich der erfassten ersten Magnetfeldsensorsignale (I_{M,S}, I_{M,M}) mit wenigstens einem Schwellenwert (SW_{S}, SW_{M}) erfolgt, und
• in Abhängigkeit des Vergleichs der ersten Magnetfeldsensorsignale (I_{M,S}, I_{M,M}) mit dem wenigstens einen Schwellenwert (SW_{S}, SW_{M}) eine erste Drehgeschwindigkeitsgröße (ΔT_{S}, m) erzeugt wird, die ein Maß für die Drehgeschwindigkeit des Rades (150, 160) repräsentiert.

2. Verfahren nach einem der vorherigen Ansprüche, **dadurch gekennzeichnet, dass** als erste Magnetfeldsensorsignale (I_{M,S}, I_{M,M})
• die Magnetfeldkomponente Bx in Fortbewegungsrichtung des Zweirads und/oder
• die Magnetfeldkomponente By in Richtung der Hochachse des Zweirads erfasst wird.

3. Verfahren nach Anspruch 1 oder 2, **dadurch gekennzeichnet, dass** in dem Vergleich eine erste Zeitdauer (ΔT_{S}) als Maß für eine erste Drehgeschwindigkeitsgröße ermittelt wird, wobei
• der Beginn der ersten Zeitdauer (ΔT_{S}) in Abhängigkeit des Vergleichs der ersten Magnetfeldsensorsignale mit einem Start-Schwellenwert (SW_{S}, SW_{M}) und
• das Ende der ersten Zeitdauer (ΔT_{S}) in Abhängigkeit des Vergleichs mit der ersten Magnetfeldsensorsignale (I_{M,S}, I_{M,M}) mit einem End-Schwellenwert (SW_{S}, SW_{M}, SW_{E})
festgelegt wird,
wobei insbesondere vorgesehen ist, dass der Start- und End-Schwellenwert (SW_{S}, SW_{M}) gleich sind.

4. Verfahren nach Anspruch 3, **dadurch gekennzeichnet, dass**
• ein erster Vergleich mit den ersten Magnetfeldsensorsignalen (I_{M,S}, I_{M,M}) der Magnetfeldkomponenten Bx durchgeführt wird und
• ein zweiter Vergleich mit den ersten Magnetfeldsensorsignalen (I_{M,S}, I_{M,M}) der Magnetfeldkomponenten By durchgeführt wird, und
• die erste Drehgeschwindigkeitsgröße (ΔT_{S}, m) in Abhängigkeit von dem ersten und zweiten Vergleich erzeugt wird.

5. Verfahren nach Anspruch 1 oder 2, **dadurch gekennzeichnet, dass**
• in Abhängigkeit des Vergleichs der ersten Magnetfeldsensorsignale (I_{M,M}) mit dem wenigstens einen Schwellenwert (SW_{M}) eine Änderung der Magnetfeldstärke der ersten Magnetfeldsensorsignale (I_{M,M}) erfasst wird, und
• die erste Drehgeschwindigkeitsgröße (m) in Abhängigkeit von Änderung der Magnetfeldstärke der ersten Magnetfeldsensorsignale (I_{M,M}) erzeugt wird,
wobei insbesondere vorgesehen ist, dass die Änderung der Magnetfeldstärke zum Zeitpunkt (t5) des Überschreitens oder des Unterschreitens des Schwellenwerts (SW_{M}) erfasst wird.

6. Verfahren nach einem der vorherigen Ansprüche, **dadurch gekennzeichnet, dass** der Vergleich ein Überschreiten oder ein Unterschreiten des Schwellenwerts (SW_{S}, SW_{M}, SW_{E}) durch die ersten Magnetfeldsensorsignale (I_{M,S}, I_{M,M}) darstellt.

7. Überprüfungsverfahren der Erfassung der Drehgeschwindigkeit, wobei
• eine erste Drehgeschwindigkeitsgröße (ΔT_{S}, m) nach einem der Verfahren gemäß der Ansprüche 1 bis 6 erzeugt wird,
**dadurch gekennzeichnet, dass** das Überprüfungsverfahren
• mittels des Magnetfeldsensors (180, 310) zweite Magnetfeldsensorsignale (I_{M,L}) erfasst werden, die
∘ einem weiteren Magneten (170, 175) oder
∘ dem gleichen Magneten (170, 175) nach einer vollständigen Umdrehung des Rades
zugeordnet werden können, und
• eine zweite Zeitdauer (ΔT_{L}) als Maß für die zweite Drehgeschwindigkeitsgröße zwischen der Erfassung der ersten Magnetfeldsensorsignale (I_{M,S}, I_{M,M}) und der Erfassung der zweiten Magnetfeldsensorsignale (I_{M,L}) ermittelt, und
• eine zweite Drehgeschwindigkeitsgröße in Abhängigkeit der erfassten zweiten Zeitdauer (ΔT_{L}) erzeugt wird, und
• ein Vergleich der ersten mit der zweiten Drehgeschwindigkeitsgröße durchgeführt wird, und
• eine Fehlermeldung erzeugt wird, falls die zweite Drehgeschwindigkeitsgröße kein im Wesentlichen ganzzahliges Vielfaches der ersten Drehgeschwindigkeitsgröße (ΔT_{S}, m) darstellt und dieses ganzzahlige Vielfache nicht der Anzahl der im überwachten Rad verbauten Magnete entspricht.

8. Überprüfungsverfahren nach Anspruch 7, **dadurch gekennzeichnet, dass** eine Fortbewegungsgeschwindigkeitsgröße des Zweirads in Abhängigkeit von der ersten Drehgeschwindigkeitsgröße (ΔT_{S}, m) erzeugt wird, wenn die zweite Drehgeschwindigkeit kein im Wesentlichen ganzzahliges Vielfaches der ersten Drehgeschwindigkeitsgröße (ΔT_{S}, m) darstellt.

9. Auswerteeinheit (300) zur Erfassung einer Drehgeschwindigkeit eines Rades (150, 160) eines Zweirads (100), insbesondere eines Fahrrads, mit einem Verfahren nach einem der Ansprüche 1 bis 8, wobei das Zweirad (100) einen mit dem Rahmen (110, 120,130, 140) gekoppelten Magnetfeldsensor (180, 310) und wenigstens ein Rad (150, 160) mit wenigstens einem Magneten (170, 175) aufweist, wobei die Auswerteeinheit zur Erfassung der Drehgeschwindigkeit
• mittels des Magnetfeldsensors (180, 310) in Abhängigkeit von der Drehbewegung des wenigstens einen Rades (150, 160) erste Magnetfeldsensorsignale (I_{M,S}, I_{M,M}) des wenigstens einen Magneten (170, 175) erfasst, und
• einen Vergleich der erfassten ersten Magnetfeldsensorsignale (I_{M,S}, I_{M,M}) mit wenigstens einem Schwellenwert (SW_{S}, SW_{M}) durchführt, und
• in Abhängigkeit des Vergleichs der ersten Magnetfeldsensorsignale (I_{M,S}, I_{M,M}) mit dem wenigstens einen Schwellenwert eine Fortbewegungsgeschwindigkeitsgröße des Zweirads erzeugt.

10. Auswerteeinheit nach Anspruch 9, **dadurch gekennzeichnet, dass** die Auswerteeinheit
• mittels des Magnetfeldsensors (180, 310) zweite Magnetfeldsensorsignale (I_{M,L}) erfasst, die
∘ einem weiteren Magneten (170, 175) oder
∘ dem gleichen Magneten (170, 175) nach einer vollständigen Umdrehung des Rades
zugeordnet werden können, und
• eine zweite Zeitdauer (ΔT_{L}) als Maß für die zweite Drehgeschwindigkeitsgröße zwischen der Erfassung der ersten Magnetfeldsensorsignale (I_{M,S}, I_{M,M}) und der Erfassung der zweiten Magnetfeldsensorsignale (I_{M,L}) ermittelt, und
• eine zweite Drehgeschwindigkeitsgröße in Abhängigkeit der erfassten zweiten Zeitdauer (ΔT_{L}) erzeugt, und
• ein Vergleich der ersten mit der zweiten Drehgeschwindigkeitsgröße durchführt, und
• eine Fehlermeldung erzeugt, falls die zweite Drehgeschwindigkeitsgröße kein im Wesentlichen ganzzahliges Vielfaches der ersten Drehgeschwindigkeitsgröße (ΔT_{S}, m) darstellt und dieses ganzzahlige Vielfache nicht der Anzahl der im überwachten Rad verbauten Magnete entspricht.

11. Auswerteeinheit nach Anspruch 10, **dadurch gekennzeichnet, dass** die Auswerteeinheit die Fortbewegungsgeschwindigkeitsgröße des Zweirads in Abhängigkeit von der ersten Drehgeschwindigkeitsgröße (ΔT_{S}, m) erzeugt, wenn die zweite Drehgeschwindigkeit kein im Wesentlichen ganzzahliges Vielfaches der ersten Drehgeschwindigkeitsgröße (ΔT_{S}, m) darstellt.

12. Auswerteeinheit nach einem der Ansprüche 9 bis 11, **dadurch gekennzeichnet, dass** eine Antriebseinheit des Zweirads in Abhängigkeit von der erzeugten Fortbewegungsgeschwindigkeitsgröße angesteuert und/oder geregelt wird.

13. Zweirad (100), insbesondere ein Fahrrad, mit einer Auswerteeinheit (300) nach einem der Ansprüche 9 bis 12, wobei das Zweirad (100) einen mit dem Rahmen (110, 120,130, 140) gekoppelten Magnetfeldsensor (180, 310) und wenigstens ein Rad (150, 160) mit wenigstens einem Magneten (170, 175) aufweist, wobei die Auswerteeinheit
• mittels des Magnetfeldsensors (180, 310) in Abhängigkeit von der Drehbewegung des wenigstens einen Rades (150, 160) erste Magnetfeldsensorsignale (I_{M,S}, I_{M,M}) des wenigstens einen Magneten (170, 175) erfasst, und
• einen Vergleich der erfassten ersten Magnetfeldsensorsignale (I_{M,S}, I_{M,M}) mit wenigstens einem Schwellenwert (SWs, SW_{M}) durchführt, und
• in Abhängigkeit des Vergleichs der ersten Magnetfeldsensorsignale (I_{M,S}, I_{M,M}) mit dem wenigstens einen Schwellenwert eine Fortbewegungsgeschwindigkeitsgröße des Zweirads erzeugt.

14. Zweirad (100) nach Anspruch 13 **dadurch gekennzeichnet, dass** das Zweirad (100) einen am oder im Rahmen (110, 120,130, 140) angeordneten Motor (145, 320) zur Erzeugung eines Vortriebs des Zweirads (100) aufweist, wobei der Motor in Abhängigkeit der erzeugten Fortbewegungsgeschwindigkeitsgröße zur Erzeugung eines Vortriebs ansteuert wird,
wobei insbesondere vorgesehen ist, dass der Magnetfeldsensor (180, 310) im oder am Motor (145, 320) angeordnet ist.

15. Zweirad (100) nach einem der Ansprüche 13 oder 14, **dadurch gekennzeichnet, dass** der wenigstens eine Magnet (170, 175) im Außenbereich des Rades (150, 160) untergebracht ist, insbesondere in oder an der Felge.
